Europäisches Patentamt

European Patent Office

Office européen des brevets

(19)

(11) EP 1 418 424 A1

(12) ## EUROPEAN PATENT APPLICATION

(43) Date of publication:
**12.05.2004 Bulletin 2004/20**

(51) Int Cl.7: **G01N 29/02**, G01N 9/00

(21) Application number: **02257641.7**

(22) Date of filing: **05.11.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicants:
- **Hok Instrument AB
  721 31 Vasteras (SE)**
- **SensoNor asa
  3192 Horten (NO)**
- **The Foundation for Technical and Industrial
  Research at the Norwegian Institute of
  Technology
  0314 Oslo (NO)**

(72) Inventors:
- **Hok, Bertil
  723 44 Vasteras (SE)**
- **Gloersen, Per
  3179 Asgardstrand (NO)**
- **Bernstein, Ralph
  0314 Oslo (NO)**

(74) Representative: **Haley, Stephen
  Gill Jennings & Every,
  Broadgate House,
  7 Eldon Street
  London EC2M 7LH (GB)**

(54) **Gas content microsensor**

(57) A sensor for monitoring gas content. The sensor comprises a housing defining at least two cavities and a resonating structure positioned in each of the cavities. Each of the resonating structures has a resonant frequency dependent upon a physical characteristic of a gas in its respective cavity. Means for exciting the resonating structures generates output signals therefrom, and means compares the output signals from each of the resonating structures and outputs a comparison signal indicative of a difference between the resonant frequencies of the two structures and the relative gas content of the at least two cavities.

Fig 1

EP 1 418 424 A1

Printed by Jouve, 75001 PARIS (FR)

## Description

The present invention relates to a sensor for monitoring gas content such as atmosphere air quality.

The subjective perception of air quality is based on several factors. Temperature is an important factor, with quite a narrow comfort interval, 18-25°C, and a considerably larger tolerance interval before health hazards occur. Perceived air quality is also highly influenced by humidity. However, air pollution is perhaps the most important health factor. Pollutants may have direct toxic effects, or may be harmful in the long term, due to accumulation, or indirect effects. Pollutants may be solid particles, liquid drops, or mixed gases. Animal respiratory airways include protective elements for separating and neutralising the effects of particulate pollutants, but most organisms are susceptible to the harmful effects of various gases.

Combustion of organic material is a major cause of air pollution. Atmospheric oxygen is consumed in the process, producing oxides of carbon and other elements which may have been present within the organic material. Gaseous carbon monoxide and dioxide ($CO$ and $CO_2$) are formed at a concentration ratio depending on oxygen supply, and combustion temperature. At very high temperatures, nitric oxides (NOX) are formed due to reaction between atmospheric nitrogen and oxygen. $CO_2$ is tolerable to concentrations as high as a few percent, whereas CO and NOX are highly toxic with significant health effects at a concentration within the ppm (parts per million) range. Of course, human activity also involves a combustion process, respiration, resulting in emission of $CO_2$ and other air pollutants.

It is a object of the present invention to provide early detection of deteriorating air quality. Early detection may prevent health hazards by providing an alert, or by controlling ventilation to avoid exposure to polluted air. It may also save energy by replacing preventive ventilation with that of demand control. Since potential sources of air pollution are abundant and unpredictable in terms of occasion and location, early detection of deteriorating air quality should preferably be provided by low cost devices, which could be distributed in large numbers to selectable locations. The devices should be reliable, able to communicate electronically with other system components, and simple to install and use, and should allow unattended operation during long periods of time.

The need for early detection of deteriorating air quality has long been recognised. The approach taken has been to detect specific pollutants, such as combustible gases, CO and carbon hydrates. The preferred detection principle is to induce a local combustion process at the surface of catalytic material. Occurrence of the local exothermal process may be detected either by its reversible effect on the material and/or by the generated heat. This class of catalytic sensors has been successfully industrialised and incorporated in gas warning systems. A reasonable compromise between cost and performance has been obtained by combining the semiconducting and catalytic properties of tin oxide with additives of noble metals, such as platinum and palladium. A number of such catalytic sensors are commercially available from several manufacturers.

However, the catalytic class of air quality sensors suffers from fundamental limitations with respect to reliability and long term use, due to the deleterious effects of some pollutants which may result in loss of sensitivity. 'False silence' is a dangerous error in alarm systems, and requires expensive counter measures. The fundamental character of the problem lies in the fact that this type of sensor is relying on a fragile reversible chemical interaction which may be overridden by irreversible chemical reactions.

Using physical detection principles rather than chemical eliminates the problem of chemical 'intoxication' of the sensor. Detection of a specific or general physical property may be performed in a passive way, with little or no interaction with the gas on the molecular level. When specificity, i.e. the identity, as well as the concentration, of a pollutant, is required, it is necessary to seek properties that are unique.

Infrared absorption spectroscopy offers an opportunity for specific detection of pollutants, due to the fact that molecular vibrations and rotations give rise to characteristic absorption spectra in the infrared wavelength range, which may be utilised as sensor principle. For example, $CO_2$ exhibits strong absorption in a relatively narrow band at 4.3μm. Infrared spectrometers are precision instruments, including an infrared emitter, an appropriately designed measuring cell allowing gas exchange and controlled propagation of infrared radiation, a wavelength dispersive element, and one or several detectors. The high mechanical and optical precision required has lead to relatively high cost, and there is a need for repeated calibrations during the life time of the system.

In many applications, including the systems for alarm and ventilation control discussed above, the requirements on specificity are relaxed. The exact nature of the pollutant may not be of interest. If the sensor output signal is used for controlling a valve or a fan motor, the desired action may be identical, regardless of the polluting species. The specificity with respect to various types of gases should not, however, be mixed up with the requirement of minimal cross sensitivity to 'general' environmental factors such as temperature, pressure, humidity, etc, which may interfere with the measurement.

In applications with relaxed specificity requirements, it is possible to use a general physical property for detection. The fields of mechanical and acoustic metrology offer such opportunities. An obvious possibility is to employ the fact that most pollutant molecules are heavier than the average molecule mass of air, which is dominated by the relatively small molecules of nitrogen and oxygen. Density at constant temperature and pressure is directly related to the average molecular mass M of a gas mixture, and the velocity of sound c is given by

$$c = (RT_y/M)^{1/2} \qquad (1)$$

i.e. dependent on the absolute temperature T but essentially independent of pressure (the general gas constant R is 8.3143 J/mol K and y is the ratio of specific heat at constant volume and pressure, respectively). A pollutant at concentration $X_x$ and with a molecular mass $M_x$ somewhat higher than the average molecular mass of air $M_{air}$ will thus contribute to decrease the velocity of sound according to the relation

$$\Delta c/c = -M_x/2(M_x \; M_{air})^* \; X_x \qquad (2)$$

which holds for small variations ($\Delta c/c \ll l$). The velocity of sound may be accurately determined by measuring the transit time of an acoustic pulse, or indirectly by measuring the resonant frequency in a standing wave arrangement according to well-known acoustic principles. Sensors for air quality control and other applications based on the measurement of the sound velocity are commercially available, but are still not adapted to high volume applications due to relatively high production cost.

The foreseen widespread use of sensors for the early detection of deteriorating air quality has been hindered by the problems outlined above. Despite large efforts along the indicated development lines, no immediate solution has been disclosed up to now. It is a object of the present invention to present such a solution.

According to the present invention, there is provided a sensor for monitoring gas content, the sensor comprising:

a housing defining at least two cavities;
a resonating structure positioned in each of the cavities, each of the resonating structures having a resonant frequency dependent upon a physical characteristic of a gas in its respective cavity;
means for exciting the resonating structures to generate output signals therefrom; and
means for comparing the output signals from each of the resonating structures and outputting a comparison signal indicative of one or more differences between the resonant frequencies of the at least two structures and the relative gas content of the cavities.

The differences may be based upon a simple subtraction, or may be based upon quotients, averages, etc.

The sensor may further comprise a passageway associated with each cavity; and means for controlling flow of atmospheric gas into the cavities via their respective passageways.

The sensor may measure a physical characteristic which is density or the speed of sound through the gas.

The resonator structure may include at least one compliant element and at least one inertial element.

The resonator structure may include at least one spring element and at least one perforated mass element.

The sensor may further comprise at least one filter unit positioned to prevent entry of solid and liquid contaminants into at least one of the cavities.

The one or more resonator structures may be formed from a micromachined silicon structure.

The means for exciting the resonating structures and for comparing the output signals may be provided by at least one application specific integrated circuit (ASIC), and the ASIC may further comprise at least one of a component for self- diagnostics, a component for digital communication, and a component for advanced signal processing.

The sensor may further comprising a pressure equalization member positioned between the cavities.

The sensor device of the invention solution provides more than a tenfold improvement with respect to production cost compared to alternative solutions, more than a tenfold improvement of quantifiable reliability, such as mean time between failure (MTBP), a hundred-fold improvement in terms of physical size (reduced weight/volume), and a thousand-fold in terms of reduced power consumption.

An example of the present invention will now be described with reference to the accompanying drawings, in which:-

Figure 1, the functional elements of an example sensor present invention and their interrelation are illustrated; and
Figure 2 depicts a preferred embodiment of the present invention.

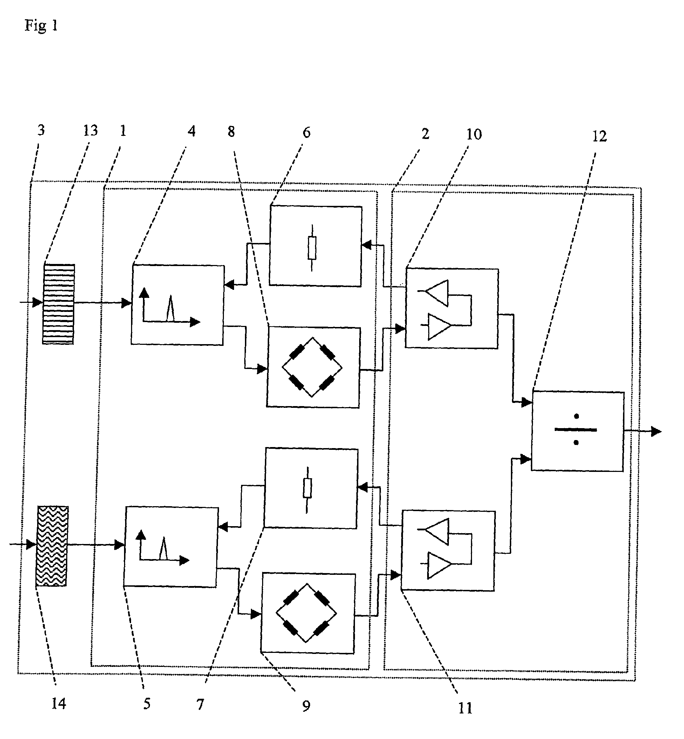

Figure 1 illustrates the functional blocks of an example sensor of the present invention. The microsensor is built up from three physically free-standing elements: These are an sensor element 1, which includes the basic sensor function, an application specific integrated circuit (ASIC) 2, including means for transferring the sensor infonnation into an electronic signal, and a package 3, enabling environmental protection of elements 1 and 2 with maintained sensing function as well as means for access to the surrounding gas atmosphere or other measuring points, and communicating electrical signals to external systems. The sensor element 1 makes use of a differential arrangement, with two nearly identical channels, operating in parallel.

The use of differential or relative measurement is based on the fact that 'air quality' is not an absolute entity. Differential measurements can be performed in one of three ways: (i) True differential, where input signals are provided at two separate points of measurement. (ii) Relative measurements against an absolute reference signal, i.e. a signal source which is reproducible in all aspects. (iii) Relative measurements against a 'floating' reference, i. e. a signal source that may be variable. In the following, it will be shown that a sensor according to the invention may operate according to any of these schemes, depending on the actual application. In all cases, operating two identical measuring channels and relating their results is suitable from the point of view of minimising the effects of undesired signal inputs of various sources. However, small size is an imperative requirement for a differential arrangement, otherwise spatial gradients of undesired inputs, such as temperature, will become a problem. Furthermore, high fabrication precision is required so that the measuring channels operating in parallel have equal characteristics. A contradicting requirement is that fabrication cost must be kept low, in particular when it comes to the marginal cost increase of producing two measuring channels compared to one. As will become evident from the following detailed description, these problems have been satisfactorily solved in the present invention.

The package 3 includes passages 13, 14 for air exchange between the point, or points, of measurement and two separate microcavities including resonators 4, 5 within the sensor element 1. The passages 13, 14 will typically define a significant functional difference for the two sensing channels operating in parallel. For example, the difference may be that the gas permeability for one of the passages 13, 14 is significantly smaller than the other. Then the output signal of the low permeability channel will correspond to the average signal over time of the high permeability channel. Such an arrangement will be useful in situations where the air quality sensor is used for detecting transient occurrences of deteriorating air quality, which may be the case in vehicles. The permeabilities of the passages 13, 14 should be pre-determinable or controllable to the extent that the low permeability channel is set to a time constant considerably longer than the maximum duration of a measurement period, whereas the time constant of the high permeability channel is set to the demand on response time. In the former application mentioned, the former may be counted in hours, the latter in less than a second. In applications for indoor air quality control, the corresponding time constants may be counted in days and minutes.

The outlined arrangement of passages 13, 14 with pre-determinable or controllable, highly differing permeabilities corresponds to either the case of an absolute reference, (ii) above, or a floating one, (iii) above. The absolute reference would result if one of the passages is essentially impermeable to gas, whereas the floating reference is valid if the reference possesses a certain permeability, which is so small that the output signal from the reference channel will not respond quickly enough to the anticipated signals. Case (iii) is useful in applications where undesired input variations can be made much slower than the desired one but cannot be eliminated. Such situations often prevail when it comes to undesired inputs, such as temperature and humidity. Temperature variations may be slowed down by proper dimensioning of thermal mass and isolation of the sensor assembly. The influence of humidity variations can be slowed down by the use of humidity traps, such as a material like cellulose with high absorption capability for water.

Case (i) corresponds to a case of actual differential measurements between two points of measurement. Such situations are frequent in applications of air quality sensors. For example, differential measurements between the inlet and outlet channels of a ventilation system is useful for demand controlled ventilation. As long as outlet air has acceptable quality. Fans may be operating at low speed, increasing as the signal from the outlet channel indicates that a source of pollution, such as respiring people, are present within the premises.

As indicated in Fig 1, the signal conversion from the physical to the electronic domain takes place in a pair of physically separated, but nearly identical resonators 4, 5. Micro-acoustic resonators may be defined using principles established by Kundt and Helmholtz the century. A Kundt resonator is defined by standing waves due to reflection, and the standing wave pattern will be dependent on the sound velocity according to well-known relations. Standing waves between solid walls a millimeter apart will occur at multiples of 170 kHz (assuming c=340 m/s), and the frequencies will slightly shift following the entrance of a pollutant. The quality factor of the resonance will depend on a number of factors, such as influence from scattering and absorption.

A Helmholtz resonator is built up by the combination of a pair of compliant and inertial elements, such as a volume cavity and a neck. The angular resonance frequency is linearly related to the velocity of sound c, with a proportionality constant determined by the device geometry:

$$\omega_r = c(S/lV)^{\frac{1}{2}}$$

where V is the volume of the cavity, and S and I are the area and length of the neck. respectively. Setting $V=0.1$ mm$^3$, $S=0.01$mm$^2$, and $t=0.1$ mm gives $f_r=w_r/2\pi=54$kHz, again assuming c=340m/s. By proper dimensioning of V, S and I, it is thus possible to 'tune' a microacoustic resonator to a desired operating frequency, and it is also possible to fine tune one resonator to another, matching them to provide zero frequency difference when exposed to an identical gas mixture. A third way to implement a resonator is to use a compliance-inertance pair in the form of a spring-mass combination, which, analogous to the Helmholtz resonator, will exhibit a natural vibrating frequency determined by the mass and the spring constant. if the mass element consists of a highly perforate structure, the effective mass will also include a certain amount of air 'dragged' by the vibrating mass which will add to the mass determining the resonant frequency. In this case, the resonant frequency will be related to the density of air, rather than the velocity of sound.

In all three examples of resonator 4, 5 embodiments, changes in resonant frequency are related to a change in composition of the gases in the surrounding atmosphere, or other measuring points with gas communication to the sensor element 1. The preferred resonator implementation is dependent upon the actual application, and since air quality control may be applied to so many different situations with specific requirements the detailed implementation may vary from one application to another. The spring-mass implementation may be preferred when small size and rapid response are high priority demands, whereas the Helmholtz implementation may be preferred when high accuracy and resolution is required. As already indicated, using velocimetry rather than densitometry reduces the cross dependence on hydrostatic pressure. In both cases, such dependence can be minimised by introducing a pressure equalising element between the two passages 13,14, consisting of a resilient, but impermeable membrane, such as an ultra-thin metal film deposited on an elastomer membrane.

The sensor element 1 also includes means for excitation 6, 7 and detection 8, 9 of the resonators 4, 5. Imposing acoustic or mechanical vibrations may be performed by piezoelectric, electrostatic, electrothermal elements. For detection, piezoelectric, capacitive or piezoresistive elements may be used. The choice is governed both by the efficiency of transformation, and by the compatibility with fabrication methods. Piezoelectric materials arc not included in standard semiconductor processes, and do not represent a first hand choice on these grounds. Electrostatic excitation and capacitive detection methods are compatible with many MEMS manufacture processes, and are favourable with respect to power consumption. On the other hand, unless high drive voltage is acceptable, the excitation structure must be extremely thin, imposing high demands on the manufacture process. Electrothermal or resistive excitation ('Joule heating') and piezoresistive detection are both compatible with standard MEMS processes, by integrating diffused or thin film resistors in the device structure, and will provide adequate power efficiency and detectability.

Electrothermal excitation elements 6, 7 may operate from one or both of two different mechanisms. If the resistor element is diffused into a thin diaphragm structure, dissipating heat will cause bending or stretching of a diaphragm or spring structure according to its thermal coefficient of expansion, which will cause it to vibrate, following the time variation of the excitation current. Diaphragm vibrations will, in turn, give rise to pressure and velocity variations in the adjacent gas. A second mechanism for generating acoustic pressure in a gas is direct heating of the gas by the resistor element. Which one of the mechanisms will dominate is highly depending on geometry and other design details.

Piezoresistive detection of resonant vibrations is based on the piezoresistive effect present in several semiconductors, including silicon, by which mechanical strain is associated with a variation in resistivity. The detectors 8, 9 are basically Wheatstone bridges, with four diffused resistors located on a diaphragm or spring structure in such a way that two resistors are elongated by a certain strain evolving from induced vibrations, whereas two are compressed. Vibrations of the structure will then unbalance the bridge, and a net output signal will be produced.

The sensor element 1 can include all sub-elements 4-9 within a single physical embodiment which preferably includes a micromachined silicon structure for definition of high precision elements, such as resistor layers, interconnecting layers, and thin diaphragms for efficient mechano-acoustic coupling. Due to the high level of standard of microelectronic and MEMS fabrication processes, the intricacy of such structures can be extremely high. High resolution photolithography defines the exact lateral geometry, and selective etch-stop techniques combined with drive-in diffusion of dopants define vertical thicknesses. For elements of submillimeter size, absolute tolerances less than a micrometer will provide adequate precision.

MEMS processes are based on single crystalline silicon wafers which typically have a diameter of 150 mm, and include several thousands of sensor elements, being processed in parallel, each sensor element consuming 5-10 $mm^2$ of wafer area depending on the actual design. To incorporate cavity structures, wafers are bonded together without adhesives. Direct wafer bonding techniques are available for bonding silicon to silicon, and between borosilicate glass and silicon. MEMS processes thus have capability and capacity to produce very large numbers of sensor elements at very low cost, despite their relatively complex and precision demanding structure.

In the differential arrangement of the sensor element 1 depicted in Fig 1, the two resonators 4, 5 are favorably located in closest possible mutual vicinity, typically less than a millimeter, within the single physical embodiment provided by the silicon, or silicon-glass structure as indicated above. By this arrangement, the influence of environmental disturbances, such as temperature, will be minimised. In cases of extreme temperature variations, such as in automotive applications, additional temperature compensation techniques may be necessary. By separate temperature measurements, it is possible to provide both offset and calibration factor correction. It is also possible to use thermostat temperature control of the sensor.

The ASIC 2 as depicted in Fig 1 includes the necessary electronic circuitry required for operating a sensor according to the invention. Resonators 4, 5 with associated drivers 6, 7 and detectors 8, 9 are preferably incorporated in two oscillator circuits 10, 11, in which the oscillating frequencies are controlled by the resonance frequencies. A simple solution is to let the resonator serve as feedback network of an amplifier, thereby forming a self oscillating loop (SOL). Another possibility is to use a phase locked loop (PLL), in which a phase comparator, a low pass filter, a voltage controlled oscillator (VCO) and the resonator forms a closed oscillating loop. Improved immunity to noise and interference is then attained at the price of somewhat higher complexity. Typically, the operation and resonance frequencies of the sensor according to the invention may be in the interval 50 kHz to 1 MHz. The frequency difference between the two measuring channels, i.e. the signal corresponding to measured air quality, may be as small as 0.1 to 10 Hz.

The output signals from the oscillators 10, 11 are fed to a comparator element 12, performing a comparative operation on the two input signals. The comparator 12 can be a mixer element, the output signal of which corresponds to the difference between the two resonance frequencies. A mixer element is basically one with a nonlinear relationship between inputs and output combined with a low pass filter, producing a signal corresponding to the frequency difference between the two inputs. Another possible comparative operation is to form the ratio between the two frequencies. This operation can be readily implemented using a digital 'divide by N' counterwhere the denominator input is controlling the number of divisions taking place in the counter. Using digital circuitry, a number of possible alternatives arise for the implementation of comparative operations.

Depending on the actual application, the ASIC 2 may also include elements for more advanced signal processing, such as performing self calibration and self diagnostics, and even self repair by using redundant functions. In some applications, digital communication circuits can also be incorporated, with electronic circuitry for communication control.

Integrating electronic functional elements on a single silicon chip is advantageous from several aspects. Firstly, reliability is improved due to the reduced number of interconnections compared to a design using discrete standard components. Cost is decreased due to simplified assembly. Also, the sensor becomes more user friendly due to the higher degree of automation. From a technical point of view, some of the modular elements may be implemented in discrete form, and assembled on a printed circuit board.

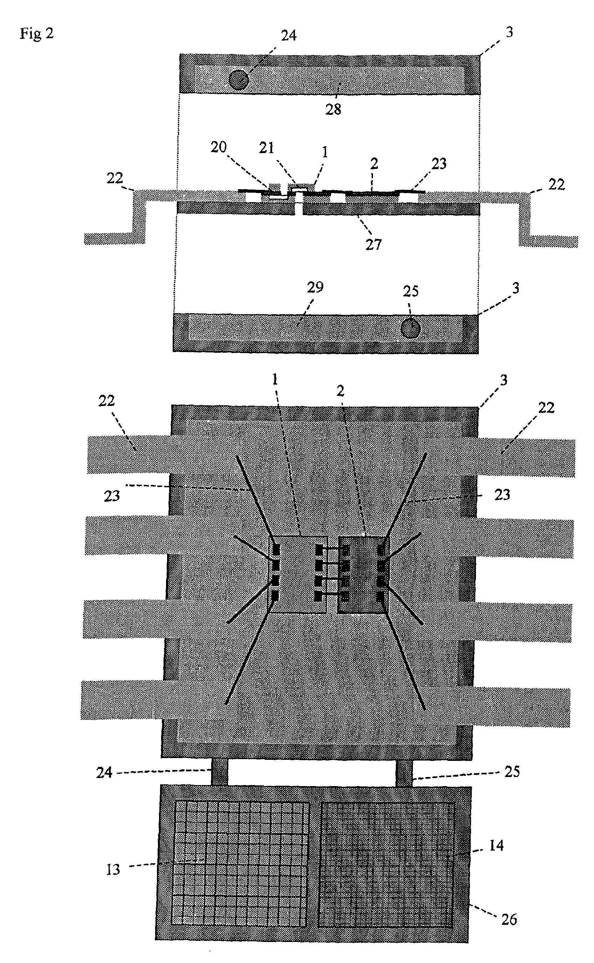

Figure 2 illustrates an embodiment of a sensor according to the invention. The basic modules of the sensor element 1, the ASIC 2 and the package 3 are clearly discernible. The package 3 is welded or glued together from an upper and lower lid structure, to which a lead frame 22 is attached. Thin wires 23 are bonded to interconnecting pads on the sensor element 1 and the ASIC 2, and connected to the lead frame 22.

The dual cavities 20, 21 of the sensor element 1 are separated by their connections upwards and downwards and by the separating floor 27, and will allow gas exchange to the upper and lower parts of the package, respectively. The floor 27 will thus divide the package 3 into two separate compartments 28, 29, each of which allow exclusive gas exchange of one of the cavities 20, 21. By openings 24, 25 in the respective parts of the package forming adequate air passages, both compartments 28, 29 may be accessible from outside the package 3 without gas mixing between the two inlets.

The passages 24, 25 connect to a dedicated filter module 26 which includes application specific filters allowing gas exchange but excluding particles and liquid drops which by deposition on the walls of the interior of the sensor element could result in long term drift, or even catastrophic failure.

The gas permeability of solid walls of different materials may vary by as much as eight orders of magnitude. Glass, ceramics and most metals could be considered impermeable in all practical aspects discussed here. Such materials may therefore be used for designing an absolute reference channel, according to the discussion above. Polymer or elastomer membranes which are more or less permeable to gases may be used as filter elements for the measuring channel and a floating reference. Between different materials and filter dimensions, it is possible to pre-determine the permeability and thus set it to the desired response time, in the case of the measuring channel, or the averaging time constant, in the case of the floating reference channel'. More elaborately, by using micro-valves to close or open certain paths for gas permeation, the corresponding penneabilities and time constants could be controlled in real time.

The filter unit 26 may be a separate, exchangeable module as indicated in Fig 2, or may be an integral part of the package 3. The former design may be preferred when it is anticipated that filter modules should be replaced during the life time of the sensor, due to clogging of smoke particles, soot, dust, aerosols etc. The passages 24, 25 may, of course, also include connectors of one of various kinds to tubing or other units.

The polymer structures constituting the package 3 and the filter module 26 are preferably fabricated by injection moulding. This allows for relatively complex geometries which will minimise the time required for device assembly and quality testing. In fact, the package and module geometries discussed herein are similar to devices already in almost fully automatic high volume production. The application specific parts, such as filter membranes of different polymer materials may be replaced between production batches, with little influence on the total production cost. The fabrication cost of the sensor according to the invention is therefore lower by more than an order of magnitude compared to devices relying on conventional precision mechanics.

The modular structure of the sensor according to the invention allows flexibility and adaptivity to specific requirements, while maintaining the scale advantages of high volume automatic production. The adaptivity may be used for tailoring the properties of the filter 26 and passage 24, 25 functions to specific applications.

**Claims**

1. A sensor for monitoring gas content, the sensor comprising:

   a housing defining at least two cavities;
   a resonating structure positioned in each of the cavities, each of the resonating structures having a resonant frequency dependent upon a physical characteristic of a gas in its respective cavity;
   means for exciting the resonating structures to generate output signals therefrom; and
   means for comparing the output signals from each of the resonating structures and outputting a comparison signal indicative of one or more differences between the resonant frequencies of the at least two structures and the relative gas content of the cavities.

2. A sensor according to claim 1, further comprising a passageway associated with each cavity; and
   means for controlling flow of atmospheric gas into the cavities via their respective passageways.

3. A sensor according to claim 1, or claim 2, wherein the physical characteristic is density.

4. A sensor according to claim 3, wherein each resonator structure includes at least one compliant element and at least one inertial element.

5. A sensor according to claim 1 or claim 2, wherein the physical characteristic is the speed of propagation of sound through the gas.

6. A sensor according to claim 5, wherein the resonator structure includes at least one spring element and at least one perforated mass element.

7. A sensor according to any preceding claim, further comprising at least one filter unit positioned to prevent entry of solid and liquid contaminants into at least one of the cavities.

8. A sensor according to any preceding claim, wherein the one or more resonator structures are formed from a micromachined silicon structure.

9. A sensor according to any preceding claim, wherein the means for exciting the resonating structures and for comparing the output signals is provided by at least one application specific integrated circuit (ASIC).

10. A sensor according to claim 9, wherein the ASIC further comprises at least one of a component for self- diagnostics, a component for digital communication, and a component for advanced signal processing.

11. A sensor according to any proceeding claim further comprising a pressure equalization member positioned between the cavities.

Fig 1

Fig 2

**European Patent Office**

## EUROPEAN SEARCH REPORT

Application Number

EP 02 25 7641

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 386 714 A (DAMES ANDREW N) 7 February 1995 (1995-02-07) * column 3, line 9 - line 63 * --- | 1-5,7,11 | G01N29/02 G01N9/00 |
| X | DE 44 36 813 A (PECTOR GMBH) 18 April 1996 (1996-04-18) * column 5, line 38 - line 62 * --- | 1-4,11 | |
| X | US 5 817 922 A (VOIGT ACHIM ET AL) 6 October 1998 (1998-10-06) * column 2, line 46 - column 3, line 5 * --- | 1,5 | |
| A | US 5 421 190 A (BRAENDLE HUBERT ET AL) 6 June 1995 (1995-06-06) * column 2, line 52 - column 3, line 36 * ----- | 1,3,7 | |

|  |  |  | TECHNICAL FIELDS SEARCHED (Int.Cl.7) |
|---|---|---|---|
|  |  |  | G01N |

The present search report has been drawn up for all claims

| Place of search | Date of completion of the search | Examiner |
|---|---|---|
| THE HAGUE | 10 April 2003 | Kouzelis, D |

EPO FORM 1503 03.82 (P04C01)

## ANNEX TO THE EUROPEAN SEARCH REPORT
## ON EUROPEAN PATENT APPLICATION NO.

EP 02 25 7641

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2003

| Patent document cited in search report | | Publication date | Patent family member(s) | | Publication date |
|---|---|---|---|---|---|
| US 5386714 | A | 07-02-1995 | GB | 2251308 A | 01-07-1992 |
| | | | CA | 2098925 A1 | 23-06-1992 |
| | | | EP | 0563078 A1 | 06-10-1993 |
| | | | WO | 9211532 A1 | 09-07-1992 |
| DE 4436813 | A | 18-04-1996 | DE | 4436813 A1 | 18-04-1996 |
| US 5817922 | A | 06-10-1998 | DE | 4417170 C1 | 05-10-1995 |
| | | | DE | 59501784 D1 | 07-05-1998 |
| | | | WO | 9531718 A1 | 23-11-1995 |
| | | | EP | 0760096 A1 | 05-03-1997 |
| | | | JP | 2749451 B2 | 13-05-1998 |
| | | | JP | 9506179 T | 17-06-1997 |
| US 5421190 | A | 06-06-1995 | DE | 4218926 A1 | 16-12-1993 |
| | | | DE | 59308708 D1 | 30-07-1998 |
| | | | EP | 0582045 A1 | 09-02-1994 |

EPO FORM P0459

For more details about this annex : see Official Journal of the European Patent Office, No. 12/82